# EUROPÄISCHE PATENTSCHRIFT

(11) **EP 0 795 701 B1**
(45) Veröffentlichungstag und Bekanntmachung des Hinweises auf die Patenterteilung: **09.05.2001**
(21) Anmeldenummer: 97103179.4
(22) Anmeldetag: 27.02.1997
(51) Int. Cl.: F16H 63/20, F16H 63/30

(54) **Schaltvorrichtung für ein Zahnräderwechselgetriebe**
Shift actuator for a change-speed gearbox
Dispositif de commande d'une boîte de vitesses

(30) Priorität: 15.03.1996 DE 19610104
(43) Veröffentlichungstag der Anmeldung: 17.09.1997
(73) Patentinhaber: DaimlerChrysler AG, 70567 Stuttgart (DE)
(72) Erfinder: Pätzold, Reiner, 70188 Stuttgart (DE); Peuster, Carsten, 73730 Esslingen (DE)

(56) Entgegenhaltungen:
- DE-A- 2 048 909
- DE-A- 3 012 764
- DE-A- 3 315 221
- DE-A- 4 137 142
- DE-A- 4 309 027
- DE-A- 19 530 616
- GB-A- 1 031 400

## Beschreibung

Die Erfindung bezieht sich auf eine Schaltvorrichtung nach dem Oberbegriff von Patentanspruch 1.

Bei einer gattungsbildenden Schaltvorrichtung der eingangs genannten Art (DE 41 37 142 A1) ist ein elektrischer Stellmotor verwendet, dessen rotatorische Stellbewegungen ausführendes Stellglied (Motorwelle) mit der Wählhülse bewegungsfest und mit der Schaltwelle durch eine zusätzliche ein- und ausrückbare Kupplung verbunden ist, während die Bremse mit der Schaltwelle verbunden ist und für die Axialbewegungen der letzteren mit einem entsprechenden Freiheitsgrad ausgebildet sein muß.Bei dieser bekannten Schaltvorrichtung wird es als wesentlich angesehen, daß nur ein Stellmotor verwendet und dieser elektrischer Natur ist,so daß das Drehmoment einfach über den Motorstrom gesteuert werden kann.Jedoch ist bei dieser bekannten Schaltvorrichtung der Bau- und Steuerungsaufwand durch die zusätzliche Kupplung hoch,welche zwangsläufig gegensinnig zur Bremse gesteuert werden muß, d.h.,wenn die Kupplung geöffnet ist - um eine translatorische Betätigung der Schaltwelle für die Gangschaltung zu erzeugen - muß die Bremse eingerückt sein, oder umgekehrt, wenn die Kupplung eingerückt ist - um eine rotatorische Betätigung der Schalwelle zum Anwählen der Schaltgassen zu erzeugen - muß die Bremse gelüftet sein.Weiterhin ist bei dieser bekannten Schaltvorrichtung der Steuerungsaufwand noch dadurch erhöht,daß der Stellmotor sowohl beim Erreichen als auch beim Verlassen des Bereiches der Neutralstellung durch die Schaltwelle stillgesetzt werden muß, damit Kupplung und Bremse umgesteuert werden können.

Bei einer bekannten Schaltvorrichtung anderer Art (DE 43 09 027 A1) sind ein mit einer Schaltwelle direkt verbundener Axialkolben und ein durch ein Hilfsgetriebe zur Umwandlung einer hin- und hergehenden Bewegung in eine Drehbewegung mit der Schaltwelle verbundener Axialkolben in einem gemeinsamen Zylindergehäuse aufgenommen.

Mit einer Schaltvorrichtung der eingangs genannten Art (ältere deutsche Patentanmeldung 195 30 616.3-14) ist bereits grundsätzlich ein Gangwechsel mit Überspringen eines oder mehrerer Gänge ermöglicht, wobei zum Betätigen der Zahnradkupplungen eine gleiche Anzahl von Schaltgliedern bewegungsfest zur Schaltwelle angeordnet sind, und zwar jeweils in Umfangs- und Axialrichtung gegeneinander versetzt. Korrespondierend hierzu ist die Wählhülse mit einer entsprechenden Anordnung von fensterartigen Öffnungen für das Ankoppeln des jeweiligen Schaltgliedes an die zugehörige Zahnradkupplung versehen, wobei Schaltwelle und Wählhülse je ein motorisch betriebenes Stellglied für ihren Antrieb aufweisen.

Die der vorliegenden Erfindung zugrunde liegende Aufgabe ist im wesentlichen darin zu sehen, bei einer Schaltvorrichtung der eingangs genannten Art den baulichen Aufwand noch zu verringern, ohne dabei die Möglichkeit von Gangwechseln unter Überspringen von Gängen aufzugeben.

Die erläuterte Aufgabe ist gemäß der Erfindung mit den kennzeichnenden Merkmalen von Patentanspruch 1 in vorteilhafter Weise gelöst.

Bei der Schaltvorrichtung nach der Erfindung ist der Antrieb der Wählhülse vom Antrieb der Schaltwelle durch Vermittlung des Hilfsgetriebes und der die hierzu erforderliche Reaktion liefernden Bremse der Wählhülse abgeleitet, so daß ein besonderer Schrittmotor für den Drehantrieb der Wählhülse nicht erforderlich ist.

Während bei der Schaltvorrichtung der älteren Patentanmeldung die Wählhülse zusätzlich noch zum Sperren der jeweils nicht mit der Schaltwelle gekoppelten Zahnradkupplungen verwendet ist und es zu diesem Zweck derselben Anzahl von Schaltgliedern an der Schaltwelle wie Zahnradkupplungen bedarf, kann bei der Schaltvorrichtung nach der vorliegenden Erfindung ein Schaltglied der Schaltwelle zum Betätigen mehrerer Zahnradkupplungen verwendet werden, weil hier die Wählhülse eine Sperrfunktion nicht aufweist.

Bei der Schaltvorrichtung nach der Erfindung erfolgt ein Gangwechsel in derselben signifikanten Drehwinkelstellung der Schaltwelle in vorteilhafter Weise nach einem Verfahren nach Patentanspruch 2.

Bei der Schaltvorrichtung nach der Erfindung erfolgt ein Gangwechsel zwischen zwei in benachbarten signifikanten Drehwinkelstellungen und beiderseits der Neutralstellung der Schaltwelle liegenden Gängen in vorteilhafter Weise nach einem Verfahren gemäß Patentanspruch 3.

Bei der Schaltvorrichtung nach der Erfindung kann für einen Gangwechsel zwischen zwei in benachbarten signifikanten Drehwinkelstellungen, jedoch gleichsinnig zur Neutralstellung der Schaltwelle liegenden Gängen zunächst nach dem Verfahren gemäß Patentanspruch 3 vorgegangen werden, woran sich dann ein Verfahrensschritt nach Patentanspruch 2 anschließt, oder umgekehrt.

Bei der Schaltvorrichtung nach der Erfindung erfolgt ein Gangwechsel zwischen zwei in verschiedenen, nicht benachbarten signifikanten Drehwinkelstellungen der Schaltwelle liegenden Gängen in vorteilhafter Weise nach einem Verfahren gemäß Patentanspruch 4.

Bei einem Gangwechsel nach dem Verfahren gemäß Patentanspruch 4 könnte bei der Schaltvorrichtung nach der Erfindung die Schaltwelle, um den Steuerungsaufwand gering zu halten, bis zum Erreichen des Zielganges in jeder der bis dahin zu durchfahrenden signifikanten Drehwinkelstellungen in die jeweiligen Gangstellungen betätigt werden.

Unter Anwendung des Verfahrens nach Patentanspruch 4 bei der Schaltvorrichtung nach der Erfindung für einen Gangwechsel zwischen zwei in verschiedenen nicht benachbarten signifikanten Drehwinkelstellungen der Schaltwelle liegenden Gängen wird jedoch der Schalt- und ggfs. ein Synchronisierungsaufwand für das Ein- und Auslegen von Zwischengängen durch ein Verfahren gemäß Patentanspruch 5 in vorteilhafter Weise vermieden.

Bei der Schaltvorrichtung nach der Erfindung kann als Hilfsgetriebe für den Antrieb der Wählhülse ein Schraubgetriebe mit einem flachen Gewinde verwendet sein, wobei die Wählhülse mit dem Innengewinde und die Schaltwelle mit dem Außengewinde ausgeführt sein könnten.

Die Patentansprüche 6 bis 11 sind auf eine vorteilhafte Ausgestaltung des Hilfsgetriebes bei der Schaltvorrichtung nach der Erfindung in Form einer Kulissenführung abgestellt, bei welcher sich eine einfachere Steuerung der Bremse als bei einem reinen Schraubgetriebe als ein wesentlicher Vorteil abgezeichnet hat.

Weitere insbesondere baulich vorteilhafte Ausgestaltungen der Schaltvorrichtung nach der Erfindung haben die Patenansprüche 12 bis 14 zum Gegenstand.

Die Erfindung ist nachstehend anhand einer in der Zeichnung schematisch dargestellten Ausführungsform näher beschrieben.

In der Zeichnung bedeuten
- Fig. 1: eine perspektivische Darstellung einer Schaltvorrichtung nach der Erfindung,
- Fig. 2: die Schaltvorrichtung von Fig. 1 in einer Ansicht, gesehen in Richtung der Drehachse der Schaltwelle,
- Fig. 3: eine zeichnerische Erläuterung des Zusammenwirkens von Schaltwelle und Wählhülse anhand der Kulisse bei der Schaltvorrichtung von Fig. 1 während eines Gangwechsels,
- Fig. 4: eine zeichnerische Abfolge von Schaltphasen bei einem Gangwechsel nach Patentanspruch 2,
- Fig. 5: eine zeichnerische Abfolge von Schaltphasen bei einem Gangwechsel nach Patentanspruch 3,
- Fig. 6: eine zeichnerische Abfolge von Schaltphasen bei einem Gangwechsel nach Patentanspruch 4, und
- Fig. 7: eine zeichnerische Abfolge von Schaltphasen bei einem Gangwechsel nach den Patentansprüchen 4 und 5.

In einem bei 11 lediglich angedeuteten Getriebegehäuses eines nicht näher dargestellten Zahnräderwechselgetriebes ist eine mit ihrer Drehachse 24-24 parallel zu den Getriebewellen ausgerichtete Schaltwelle 12 drehbar und axial verschiebbar gelagert. Zum Ankuppeln der Losräder der die Getriebeübersetzungen liefernden Zahnradstufen an ihre Getriebewelle sitzen auf den Getriebewellen Zahnradkupplungen, welche entweder einzeln oder paar- und wahlweise durch Schaltgabeln 8, 9 und 10 betätigt werden, die wiederum jeweils mit einer zugehörigen Schaltschiene oder - stange 31-8, 31-9 und 31-10 bewegungsfest verbunden sind. Diese Schaltstangen sind sowohl gegenüber dem Getriebegehäuse 11 jeweils entlang einer zur Drehachse 24-24 parallelen Bewegungsbahn linear beweglich gelagert als auch mit je einer Kupplungsnut 32 für den Eingriff eines zur Schaltwelle 12 radial und bewegungsfest angeordneten Schaltfingers 13 versehen. Dabei ist die Anordnung so getroffen, daß in demjenigen Getriebezustand, in welchem alle Zahnradkupplungen ausgerückt sind, der Schaltfinger 13 und alle Kupplungsnuten 32 in einer Neutralstellung stehen, also mittig zu einer Gehäuseebene liegen, welche auf der Drehachse 24-24 senkrecht steht.

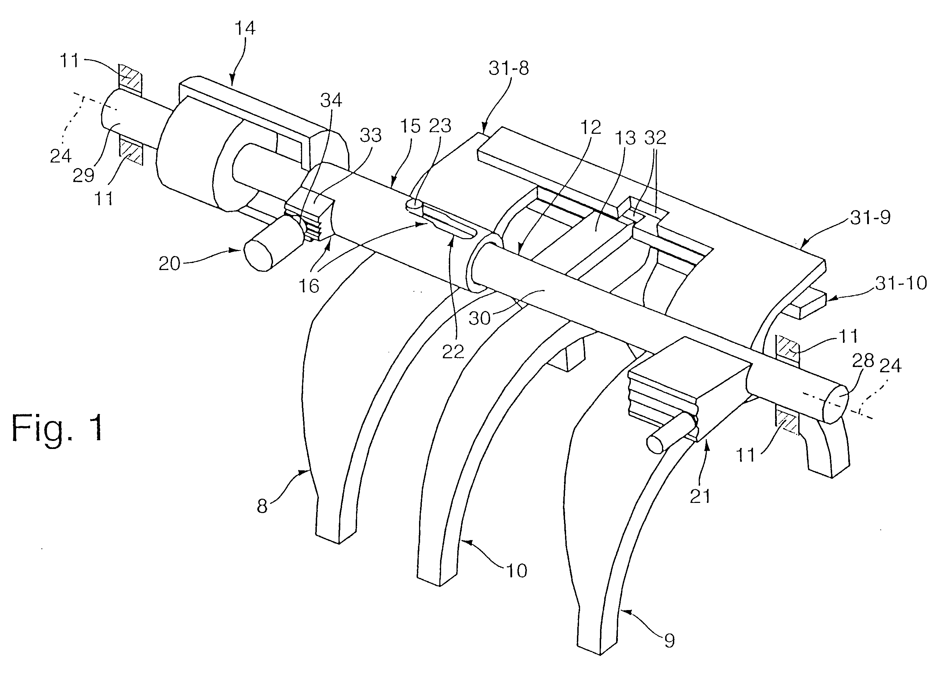

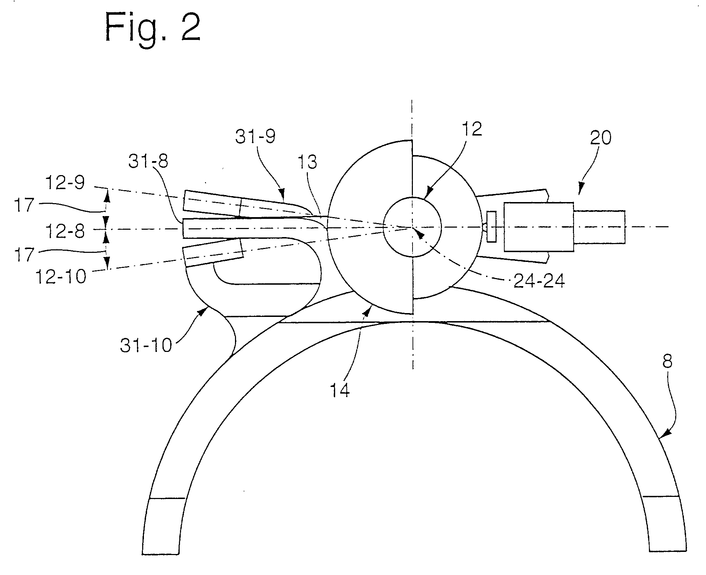

Die Schaltstangen 31-8, 31-9 und 31-10 sind mit ihrer jeweiligen Kupplungsnut 32 in je einer zugehörigen Drehwinkelstellung um die Drehachse 24-24 der Schaltwelle 12 gegenüber dem Getriebegehäuse 11 fixiert. Die Schaltwelle 12 muß demnach in eine signifikante Drehwinkelstellung 12-8 betätigt werden, wenn der Schaltfinger 13 gemäß den Figuren 1 und 2 mit der Schaltnut 32 der Schaltstange 31-8 in Eingriff stehen soll. Die Schaltwelle 12 muß in eine signifikante Drehwinkelstellung 12-9 betätigt werden, wenn der Schaltfinger 13 mit der Schaltnut 32 der Schaltstange 31-9 in Eingriff gebracht werden soll. Und die Schaltwelle 12 muß in eine signifikante Drehwinkelstellung 12-10 betätigt werden, wenn der Schaltfinger 13 mit der Schaltnut 32 der Schaltstange 31-10 in Eingriff stehen soll.

Jede der Schaltstangen 31-8, 31-9 und 31-10 kann - ausgehend von der Neutralstellung - in der vom Schaltfinger 13 auf das eine Wellenende 29 der Schaltwelle 12 weisenden Axialrichtung in eine Gangstellung a oder in der entgegengesetzten Axialrichtung in eine Gangstellung d betätigt werden.

Zur Betätigung der Schaltwelle 12 in ihre den Gangstellungen a und d zugehörigen beiden Endstellungen ist die Schaltwelle 12 an ihrem Wellenende 29 mit einem Schaltstellglied 14 der Axialkolben-Bauart gekoppelt.

Zum Betätigen der Schaltwelle 12 in ihre signifikanten Drehwinkelstellungen 12-8, 12-9 und 12-10 ist eine Wählhülse 15 verwendet, welche unter Vermittlung eines Hilfsgetriebes 16 zur Umwandlung einer hin- und hergehenden Bewegung in eine Drehbewegung mit der Schaltwelle 12 verbunden ist, wobei die Getriebereaktion durch eine ein- und ausrückbare Bremse 20 vermittelt und die Wählhülse 15 ebenfalls vom Schaltstellglied 14 angetrieben wird.

Während der Schaltfinger 13 an einem mittleren Abschnitt 30 der Schaltwelle 12 angeordnet ist, ist das andere Ende 28 der Schaltwelle 12 mit einer Rasteneinrichtung 21 verbunden, durch welche die Schaltwelle 12 in ihren signifikanten Drehwinkelstellungen 12-8, 12-9 und 12-10 gegenüber dem Getriebegehäuse 11 verrastet ist.

Die Wählhülse 15 ist in nicht mehr dargestellter Weise gegenüber dem Getriebegehäuse 11 drehbar und axial unverschiebbar angeordnet.

Die Wählhülse 15 ist auf dem zwischen Schaltfinger 13 und Schaltstellglied 14 liegenden Abschnitt der Schaltwelle 12 konzentrisch sowie relativ zur Schaltwelle 12 an sich sowohl drehbeweglich als auch axialbeweglich angeordnet.

Die Bremse 20 ist formschlüssig und an dem dem Schaltstellglied 14 zugekehrten Hülsenende der Wählhülse 15 angeordnet, wobei die Wählhülse 15 hier ein zu ihr bewegungsfestes Rastensegment 33 aufweist, das mit je einer Raste für die Drehwinkelstellungen der Wählhülse 15 gegenüber dem Getriebegehäuse 11 versehen ist, wobei in die Rasten ein Bremseingriffsglied 34 formschlüssig eingreifen kann, welches motorisch betätigbar und radial beweglich zur Drehachse 24-24 angeordnet ist.

Für das Hilfsgetriebe 16 ist eine zur Wählhülse 15 bewegungsfest angeordnete Kulisse 22 mit einem zur Schaltwelle 12 radial und bewegungsfest angeordneten Kulissenstein oder -stift 23 verwendet.

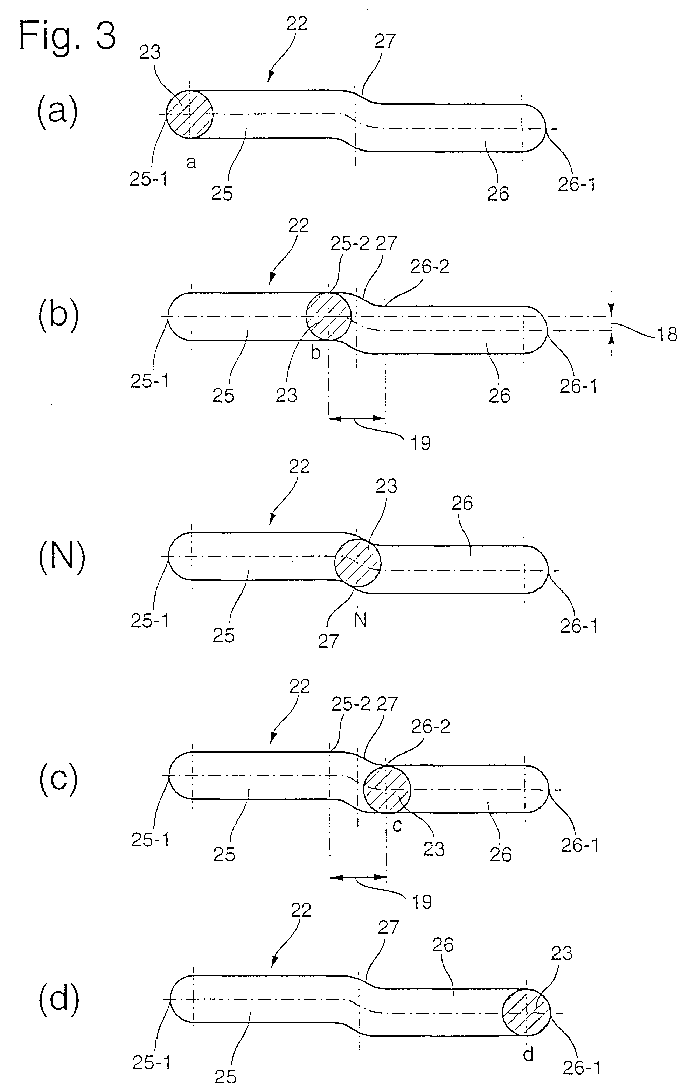

Die Kulisse 22 weist zwei Kulissenabschnitte 25 und 26 auf, welche parallel zur Drehachse 24-24 der Schaltwelle 12 verlaufen und in Umfangsrichtung gegeneinander versetzt sind, und zwar um einen Versatz 18 (Fig. 3(b)), welcher dem Differenzdrehwinkel 17 (Fig. 2) entspricht, um welchen die benachbarten signifikanten Drehwinkelstellungen 12-8 und 12-9 sowie 12-8 und 12-10 der Schaltwelle 12 gegeneinander versetzt liegen.

Den zueinander entgegengesetzt liegenden Kulissenenden 25-1 und 26-1 der Kulissenabschnitte 25 und 26 ist jeweils eine Stellung a (Fig. 3(a)) und d (Fig. 3(d)) des Kulissenstiftes 23 zugeordnet, welche der jeweiligen Endstellung der Schaltwelle 12 und somit den Gangstellungen a und d der Schaltstangen 31-8, 31-9 und 31-10 entspricht.

An den einander zugekehrten Kulissenenden 25-2 und 26-2 sind die Kulissenabschnitte 25 und 26 durch einen mittleren Kulissenabschnitt 27 mit zur Drehachse 24-24 der Schaltwelle 12 geneigtem und durch den Versatz 18 bestimmten Verlauf miteinander verbunden. Der mittlere Abschnitt 27 der Kulisse 22 ist der Neutralstellung N (Fig. 3(N)) des Kulissenstiftes 23 und somit der Neutralstellung der Schaltwelle 12 zugeordnet.

Die einander zugekehrten Kulissenenden 25-1 und 26-1 der Kulissenabschnitte 25 und 26 schließen den Bereich 19 (Fig. 3(b) und (c)) der Neutralstellung N zwischen sich ein, welcher für die Steuerung der Schaltwelle 12 durch die Bremse 20 von wesentlicher Bedeutung ist. Die Stellung des Kulissenstiftes 23 am Übergang 25-2 zwischen den Kulissenabschnitten 25 und 27 ist mit b angegeben (Fig. 3(b)). Die Stellung des Kulissenstiftes 23 am Übergang 26-2 zwischen den Kulissenabschnitten 26 und 27 ist mit c angegeben (Fig. 3(c)).

Die Arbeitsweise der Schaltvorrichtung nach der Erfindung ergibt sich wie folgt:

In den Fign. 1 und 2 ist die Schaltvorrichtung in einem Zustand gezeigt, bei welchem die Schaltstange 31-8 in der Gangstellung a und die Schaltwelle 12 in der entsprechenden Endstellung (Stellung a des Kulissenstiftes 23) sowie in der signifikanten Drehwinkelstellung 12-8 für den Eingriff des Schaltfingers 13 in die Schaltnut 32 der Schaltstange 31-8 stehen.

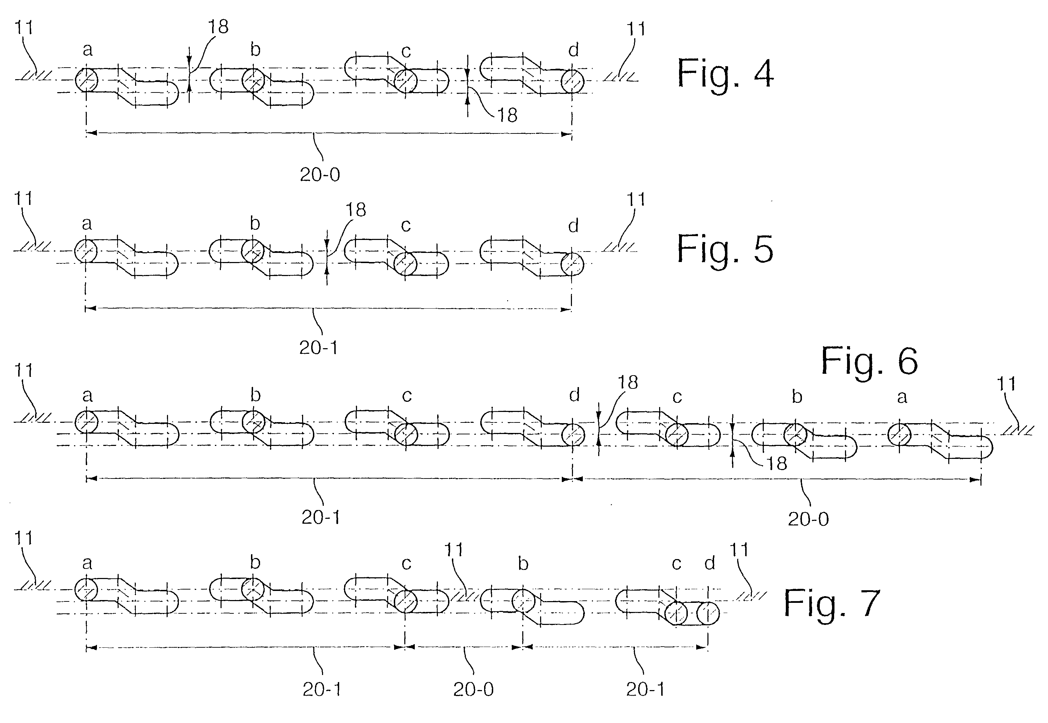

Bei einem Gangwechsel aus der Gangstellung a der Schaltstange 31-8 in den ausgewählten gassengleichen Gang (Gangstellung d der Schaltstange 31-8) wird gemäß Patentanspruch 2 und Fig. 4 die Bremse 20 im ausgerückten Zustand 20-0 und die Schaltwelle 12 durch die Rasteneinrichtung 21 in der signifikanten Drehwinkelstellung 12-8 gehalten. Die Schaltwelle 12 wird durch das Schaltstellglied 14 in die der Gangstellung d entsprechende Endstellung betätigt, wobei die reaktionslose Wählhülse 15 durch den Kulissenstift 23 beim Durchlaufen des Bereiches 19 der Neutralstellung N um den Versatz 18 in dem von der Schaltstange 31-8 auf die Schaltstange 31-10 weisenden Drehsinn - im folgenden als Uhrzeigersinn definiert - gegenüber der Schaltwelle 12 verdreht wird.

Bei einem Gangwechsel aus der Gangstellung a der Schaltstange 31-8 in die Gangstellung d der benachbarten Schaltstange 31-9 wird gemäß Patentanspruch 3 und Fig. 5 die Bremse 20 im eingerückten Zustand 20-1 gehalten und die Schaltwelle 12 durch das Schaltstellglied 14 in die der Gangstellung d zugehörige Endstellung betätigt, wobei der Schaltwelle 12 beim Durchlaufen des Bereiches 19 der Neutralstellung N durch den Kulissenabschnitt 27 eine Drehbewegung um den Differenzdrehwinkel 17 in die signifikante Drehwinkelstellung 12-9 aufgezwungen wird, deren Drehsinn zu dem Drehsinn der Wählhülse 19 bei dem vorbeschriebenen Gangwechsel mit ausgerückter Bremse 20 entgegengesetzt ist.

Bei einem Gangwechsel aus der Gangstellung a der Schaltstange 31-8 in die Gangstellung a der Schaltstange 31-9 wird zunächst die Schaltwelle 12 gemäß Patentanspruch 3 und Fig. 6 - wie vorstehend beschrieben - in die Gangstellung d der Schaltstange 31-9 im eingerückten Zustand 20-1 der Bremse 20 betätigt, wobei sich eine weitere entgegengesetzte Betätigung der Schaltwelle 12 gemäß Patentanspruch 2 und Fig. 6 so anschließt, daß die Bremse 20 bei der Verlagerung der Schaltwelle 12 in die der Gangstellung a entsprechende Endstellung im ausgerückten Zustand 20-0 gehalten wird.

Bei einem Gangwechsel aus der Gangstellung a der Schaltstange 31-8 in die Gangstellung d der Schaltstange 31-10 wird die Schaltwelle 12 zunächst bei ausgerückter Bremse 20 gemäß Patentanspruch 2 und Fig. 4 in die der Gangstellung d entsprechende Endstellung betätigt, wodurch die reaktionslose Wählhülse 15 um den Differenzdrehwinkel 17 im Uhrzeigersinn gegenüber der Schaltwelle verdreht wird. Danach schließt sich eine entgegengesetzte Betätigung der Schaltwelle 12 gemäß Patentanspruch 3 und Fig. 6 in die andere Endstellung im eingerückten Zustand 20-1 der Bremse 20 an, so daß der Schaltwelle 12 eine Drehbewegung um den Differenzdrehwinkel 17 im Uhrzeigersinn in die signifikante Drehwinkelstellung 12-10 für den Eingriff des Schaltfingers 13 in die Kupplungsnut 32 der Schaltstange 31-10 aufgezwungen wird. Schließlich erfolgt eine entgegengesetzte Betätigung der Schaltwelle 12 bei ausgerückter Bremse 20 in die der Gangstellung d entsprechende Endstellung.

Bei dem zuletzt beschriebenen Gangwechsel hat sich besonders gezeigt, daß der gewünschte Drehsinn der Schaltwelle 12 durch Festlegung des Betriebszustandes der Bremse 20 vor dem erstmaligen Durchlaufen der Neutralstellung nach Beginn des Gangwechsels einsteuerbar ist.

Ein besonderer Vorteil der Kulissenführung 22-23 gegenüber einem reinen Schraubgetriebe ist offensichtlich der, daß durch den parallelen Verlauf der Kulissenabschnitte 25, 26 die Steuerung der Bremse 20 nicht genau auf die Übergänge 25-2 und 26-2 zum geneigten Verlauf des Kulissenabschnittes 27 der Neutralstellung N abgestimmt sein muß, sondern der für den Gangwechsel erforderliche Zustand der Bremse 20 kann bereits bei noch eingelegtem alten Gang eingesteuert werden.

Während bei dem zuletzt beschriebenen Gangwechsel ein mehrfaches Durchlaufen der Neutralstellung N durch die Schaltwelle 12 bei jeweiligem Wechsel des Betriebszustandes der Bremse 20 erforderlich war und die Schaltwelle 12 jedesmal in ihre jeweilige Endstellung (Stellung a oder d des Kulissenstiftes 23) betätigt wurde, ist bei dem Gangwechsel nach Patentanspruch 5 und Fig. 7 zwar ebenfalls ein mehrfaches Durchlaufen der Neutralstellung N durch die Schaltwelle 12 mit entsprechender Umsteuerung der Bremse 20 vorgesehen, um beispielsweise von einer ersten signifikanten Drehwinkelstellung in eine nicht benachbarte zweite signifikante Drehwinkelstellung zu gelangen, jedoch wird hierbei von einer Betätigung der Schaltwelle 12 in ihre Endstellungen abgesehen, solange nicht die signifikante Drehwinkelstellung des Zielganges erreicht ist.

Dies soll anhand eines Gangwechsels aus der Gangstellung a der Schaltstange 31-10 in die Gangstellung d der Schaltstange 31-9 erläutert werden.

Die Schaltstange 31-9 ist gegenüber der Schaltstange 31-10 entgegen dem Uhrzeigersinn versetzt, so daß gemäß Fig. 7 die Bremse 20 bei Beginn des Gangwechsels (Einschalten des Schaltstellgliedes 14) eingerückt und der Schaltwelle 12 beim Durchlaufen der Neutralstellung N von b nach c eine Drehbewegung im Betrage des Differenzdrehwinkels 17 entgegen dem Uhrzeigersinn in die benachbarte signifikante Drehwinkelstellung 12-8 aufgezwungen wird.

Beim Erreichen der Stellung c durch die Schaltwelle 12 werden die Bremse 20 ausgerückt und das Schaltstellglied 14 umgesteuert, so daß die Schaltwelle 12 den Bereich 19 der Neutralstellung N von c nach b - also noch vor Erreichen der Gangstellung d der signifikanten Drehwinkelstellung 12-8 - durchläuft, wodurch der hierbei reaktionslosen Wählhülse 15 eine Drehbewegung um den Versatz 18 - also im Betrage entsprechend dem Differenzdrehwinkel 17 entgegen dem Uhrzeigersinn - aufgezwungen wird, so daß der Kulissenabschnitt 26 seine der signifikanten Drehwinkelstellung 31-9 entsprechende Stellung einnimmt.

Wenn die Schaltwelle 12 nunmehr die Stellung b nach Durchlaufen der Neutralstellung N erreicht, werden die Bremse 20 in den eingerückten Zustand 20-1 gebracht und das Schaltstellglied 14 umgesteuert, so daß der Schaltwelle 12 beim Betätigen in Richtung der der Gangstellung d entsprechenden Endstellung durch den Kulissenabschnitt 27 eine Drehbewegung um den Differenzdrehwinkel 17 entgegen dem Uhrzeigersinn in die signifikante Drehwinkelstellung 12-9 aufgezwungen und somit die Schaltstange 31-9 durch den Schaltfinger 13 in ihre dem angesteuerten Zielgang entsprechende Gangstellung d betätigt wird.

## Patentansprüche

1. Schaltvorrichtung für ein Zahnräderwechselgetriebe,mit wenigstens zwei Zahnradkupplungen zum Ankuppeln jeweils eines zugehörigen Zahnrades an seine Getriebewelle, miteiner relativ zu einem Getriebegehäuse drehbar und axialbeweglich gelagerten Schaltwelle (12), mit wenigstens einem zur Schaltwelle (12) bewegungsfest angeordneten Schaltglied (13) zum Betätigen der Zahnradkupplungen unter Axialbewegungen der Schaltwelle (12), mit einer dem ausgerückten Zustand aller Zahnradkupplungen entsprechenden Neutralstellung der Schaltwelle (12) in bezug auf deren Axialbewegungen, mit signifikanten Drehwinkelstellungen (12-8, 12-9 und 12-10) der Schaltwelle (12), in denen jeweils wenigstens eine zugehörige Zahnradkupplung durch das Schaltglied (13) betätigbar ist, mit einer dem eingerückten Zustand einer der jeweiligen signifikanten Drehwinkelstellung zugehörigen Zahnradkupplung entsprechenden Gangstellung der Schaltwelle (12) mit einem Stellmotor (14) zur Verlagerung der Schaltwelle (12) in den Axialrichtungen,mit einer zum Betätigen der Schaltwelle (12) in die signifikanten Drehwinkelstellungen (12-8, 12-9 und 12-10) verwendeten Wählhülse (15), die relativ zur Schaltwelle (12) konzentrisch und axial beweglich sowie relativ zum Getriebegehäuse (11) drehbeweglich und axial bewegungsfest angeordnet ist und bei der Schaltwelle (12) und Wählhülse (15) durch ein Hilfsgetriebe (16) zum Umwandeln einer hin- und hergehenden Bewegung in eine Drehbewegung miteinander verbunden sind und das Hilfsgetriebe (16) eine ein- und ausrückbare Bremse (20) aufweist, die mit einem der Getriebeglieder wirkungsmäßig verbunden ist,
**dadurch gekennzeichnet**,
daß die Schaltwelle (12)bewegungsfest gegenüber dem axiale Stellbewegungen ausführenden Stellglied des Stellmotores (14)angeordnet und die Wählhülse (15) mit der Bremse (20) verbunden ist, daß das Hilfsgetriebe (16) eine Relativdrehung zwischen der Schaltwelle (12) und der Wählhülse (15) um einen dem Abstand zweier benachbarter signifikanter Drehwinkelstellungen (12-8 und 12-9 oder 12-8 und 12-10) der Schaltwelle (12) entsprechenden Differenzdrehwinkel (17)zwangsläufig festlegt, wenn die Schaltwelle (12)den Bereich (19)ihrer Neutralstellung (N)durchläuft,daß eine wirkungsmäßig zwischen dem Getriebegehäuse (11)des Zahnräderwechselgetriebes und der Schaltwelle (12) angeordnete Rasteneinrichtung (21) für die signifikanten Drehwinkelstellungen (12-8, 12-9 und 12-10) der Schaltwelle (12) verwendet und die Anordnung weiterhin so getroffen ist, daß eine Betätigung der Schaltwelle (12) aus einer Gangstellung (a oder d) in die Neutralstellung (N) im eingerückten Zustand (20-1) der Bremse (20) zwangsläufig zu einer Drehung der Schaltwelle (12) in dem einen Drehsinn, dagegen im ausgerückten Zustand (20-0) der Bremse (20) zwangsläufig zu einer Drehung der Wählhülse (15) in dem anderen Drehsinn jeweils um den Differenzdrehwinkel (17) gegenüber dem Getriebegehäuse (11) des Zahnräderwechselgetriebes führt.

2. Verfahren zum Steuern einer Schaltvorrichtung nach Patentanspruch 1 für den Wechsel der Schaltwelle zwischen zwei in einer gemeinsamen signifikanten Drehwinkelstellung und beiderseits der Neutralstellung liegenden Gangstellungen ,
**dadurch gekennzeichnet,**
daß die Bremse (20) beim Durchlaufen der Neutralstellung (N) durch die Schaltwelle (12) im ausgerückten Zustand (20-0 in Fig.4) gehalten wird.

3. Verfahren zum Steuern einer Schaltvorrichtung nach Patentanspruch 1 für den Wechsel der Schaltwelle zwischen zwei in benachbarten signifikanten Drehwinkelstellungen und beiderseits der Neutralstellung liegenden Gangstellungen,
**dadurch gekennzeichnet,**
daß die Bremse (20) beim Durchlaufen der Neutralstellung (N) durch die Schaltwelle (12) im eingerückten Zustand (20-1 in Fig.5) gehalten wird.

4. Verfahren zum Steuern einer Schaltvorrichtung nach Patentanspruch 1 für den Wechsel der Schaltwelle zwischen zwei in verschiedenen, nicht benachbarten signifikanten Drehwinkelstellungen liegenden Gangstellungen,
**dadurch gekennzeichnet**,
daß die Schaltwelle (12) die Neutralstellung (N) abwechselnd in beiden Axialrichtungen durchläuft sowie die Bremse (20) beim Durchlaufen in der einen Axialrichtung im eingerückten Zustand (20-1)und beim Durchlaufen in der anderen Axialrichtung im ausgerückten Zustand (20-0)gehalten wird.

5. Verfahren nach Patentanspruch 4 für den Wechsel der Schaltwelle zwischen einer momentanen und einer ausgewählten Gangstellung,
**dadurch gekennzeichnet**,
daß die Schaltwelle (12) nach Erreichen einer nicht die ausgewählte Gangstellung enthaltenden signifikanten Drehwinkelstellung (12-8) und nach Verlassen der Neutralstellung (N) noch vor Erreichen einer Gangstellung (a oder d) in ihrer axialen Bewegung in die jeweils andere Axialrichtung umgesteuert wird (Fig.7).

6. Schaltvorrichtung nach Patentanspruch 1,
**dadurch gekennzeichnet**,
daß für das Hilfsgetriebe eine Kulisse (22) mit einem korrespondierenden Kulissenstein (23) verwendet ist.

7. Schaltvorrichtung nach Patentanspruch 6,
**dadurch gekennzeichnet**,
daß die Kulisse (22) zwei sowohl in den Richtungen der Drehachse (24-24) der Schaltwelle (12) als auch um den Differenzdrehwinkel (17) gegeneinander versetzt liegende Kulissenabschnitte (25, 26) mit zur Drehachse (24-24) parallelem Verlauf aufweist.

8. Schaltvorrichtung nach Patentanspruch 7,
**dadurch gekennzeichnet**,
daß von den zueinander entgegengesetzt liegenden Kulissenenden (25-1, 26-1) der Kulissenabschnitte (25, 26) wenigstens das eine Kulissenende (25-1 bzw. 26-1) einer Gangstellung (a, d) der Schaltwelle (12) zugeordnet ist.

9. Schaltvorrichtung nach einem der Patentansprüche 6 bis 8,
**dadurch gekennzeichnet**,
daß die Kulisse (22) einen mittleren Kulissenabschnitt (27) mit einem zur Drehachse (24-24) der Schaltwelle (12) geneigten Verlauf aufweist und der mittlere Kulissenabschnitt (27) der Neutralstellung (N) der Schaltwelle (12) zugeordnet ist.

10. Schaltvorrichtung nach einem der Patentansprüche 7 bis 9,
**dadurch gekennzeichnet**,
daß an dem Übergang (25-2, 26-2) zwischen dem der Neutralstellung (N) zugeordneten Kulissenabschnitt (27) und einem mit seinem Kulissenende (25-1, 26-1) einer Gangstellung (a, d) zugeordneten Kulissenabschnitt (25, 26) die Auslösung eines Steuersignales für die Umsteuerung der Schaltwelle (12) in die auf den anderen einer Gangstellung (a, d) zugeordneten Kulissenabschnitt (26, 25) weisende Axialrichtung vorgesehen ist.

11. Schaltvorrichtung nach einem der Patentansprüche 6 bis 10,
**dadurch gekennzeichnet**,
daß die Kulisse (22) zur Wählhülse (15) bewegungsfest angeordnet ist.

12. Schaltvorrichtung nach Patentanspruch 1,
**dadurch gekennzeichnet**,
daß das eine Wellenende (28) der Schaltwelle (12) mit der Rasteneinrichtung (21) und das andere Wellenende (29) der Schaltwelle (12) mit einem Schaltstellglied (14) verbunden sind, daß das Schaltglied (13) an einem mittleren Wellenabschnitt (30) der Schaltwelle (12) und die Wählhülse (15) an einem zwischen dem Schaltstellglied (14) und dem Schaltglied (13) liegenden Wellenabschnitt der Schaltwelle (12) angeordnet sind, und daß die Bremse (20) an dem dem Schaltstellglied (14) zugekehrten Hülsenende der Wählhülse (15) angeordnet ist.

13. Schaltvorrichtung nach Patentanspruch 1,
**dadurch gekennzeichnet**,
daß die Zahnradkupplungen über Schaltstangen (31-8, 31-9, 31-10) betätigt werden, welche sowohl achsparallel als auch im gleichen Axialbereich relativ zur Drehachse (24-24) der Schaltwelle (12) und axialbeweglich relativ zum Getriebegehäuse (11) angeordnet sind sowie je eine Kupplungsnut (32) für den Eingriff eines als Schaltglied verwendeten Schaltfingers (13) aufweisen.

14. Schaltvorrichtung nach Patentanspruch 1,
**dadurch gekennzeichnet**,
daß die Bremse (20) formschlüssig ist und die Wählhülse (15) ein Rastensegment (33) mit den signifikanten Drehwinkelstellungen (12-8, 12-9 und 12-10) der Schaltwelle (12) zugeordneten Rasten für den Eingriff eines zur Drehachse (24-24) der Schaltwelle (12) radial beweglichen Bremseingriffsgliedes (34) aufweist.

## Claims

1. Shift device for a change speed gearbox, having at least two gear wheel clutches for coupling in each case one associated gear wheel to its gearbox shaft, having a shift shaft (12) which is rotatably and axially movably mounted relative to a gearbox casing, having at least one shift element (13), arranged fixedly in terms of movement with respect to the shift shaft (12), for activating the gear wheel clutches with axial movements of the shift shaft (12), having a neutral position of the shift shaft (12) in relation to its axial movements, the neutral position corresponding to the disengaged state of all the gear wheel clutches, having significant angle of rotation positions (12-8, 12-9 and 12-10) of the shift shaft (12), in which in each case at least one associated gear wheel clutch can be activated by the shift element (13), having a gear speed position of the shift shaft (12) corresponding to the engaged state of a gear wheel clutch associated with the respective significant angle of rotation position, having an actuator motor (14) for displacing the shift shaft (12) in the axial directions, having a selector sleeve (15), which is used for activating the shift shaft (12) into the significant angle of rotation positions (12-8, 12-9 and 12-10), and is arranged concentrically and axially movably relative to the shift shaft (12), and rotatably and axially fixedly in terms of movement relative to the gearbox casing (11), and in which the shift shaft (12) and the selector sleeve (15) are connected to one another by means of an auxiliary mechanism (16) in order to convert a reciprocatory movement into a rotational movement and the auxiliary mechanism (16) has a brake (20) which can be engaged and disengaged and is connected in terms of action to one of the gearbox elements, characterized in that the shift shaft (12) is arranged fixedly in terms of movement with respect to the actuator element of the actuator motor (14) performing axial actuating movements and the selector sleeve (15) is connected to the brake (20), in that the auxiliary mechanism (16) necessarily establishes a relative rotation between the shift shaft (12) and the selector sleeve (15) by a difference angle of rotation (17) corresponding to the distance between two adjacent significant angle of rotation positions (12-8 and 12-9 or 12-8 and 12-10) of the shift shaft (12) when the shift shaft (12) runs through the region (19) of its neutral position (N), in that a latching device (21) arranged in terms of action between the gearbox casing (11) of the change speed gearbox and the shift shaft (12) is used for the significant angle of rotation positions (12-8, 12-9 and 12-10) of the shift shaft (12) and the arrangement is also effected in such a way that activation of the shift shaft (12) out of a gear speed position (a or d) into the neutral position (N) in the engaged state (20-1) of the brake (20) inevitably leads to a rotation of the shift shaft (12) in the one rotational sense, whereas in the disengaged state (20-0) of the brake (20) it inevitably leads to a rotation of the selector sleeve (15) in the other rotational sense in relation to the gearbox casing (11) of the change speed gearbox, in each case by the difference angle of rotation (17).

2. Method for controlling a shift device according to Patent Claim 1 for changing the shift shaft between two gear speed positions, located in a common significant angle of rotation position and on each side of the neutral position, characterized in that, when the shift shaft (12) passes through the neutral position (N), the brake (20) is held in the disengaged state (20-0 in Fig. 4).

3. Method for controlling a shift device according to Patent Claim 1 for changing the shift shaft between two gear speed positions, located in adjacent significant angle of rotation positions and on each side of the neutral position, characterized in that, when the shift shaft (12) passes through the neutral position (N), the brake (20) is held in the engaged state (20-1 in Fig. 5).

4. Method for controlling a shift device according to Patent Claim 1 for changing the shift shaft between two gear speed positions, located in various non-adjacent significant angle of rotation positions, characterized in that the shift shaft (12) passes through the neutral position (N) alternately in both axial directions, and as it passes through in the one axial direction the brake (20) is held in the engaged state (20-1) and as it passes through in the other axial direction the brake (20) is held in the disengaged state (20-0).

5. Method according to Patent Claim 4 for changing the shift shaft between an instantaneous gear speed position and a selected gear speed position, characterized in that, after the shift shaft (12) has reached a significant angle of rotation position (12-8) which does not include the selected gear speed position and after it has departed from the neutral position (N) but before a gear speed position (a or d) has been reached, the axial movement of the shift shaft is adjusted into the respective other axial direction (Fig. 7).

6. Shift device according to Patent Claim 1, characterized in that a slider (22) with a corresponding slider block (23) is used for the auxiliary mechanism.

7. Shift device according to Patent Claim 6, characterized in that the slider (22) has two slider sections (25, 26), located offset with respect to one another both in the directions of the axis of rotation (24-24) of the shift shaft (12) and by the difference angle of rotation (17), and extending parallel to the axis of rotation (24-24).

8. Shift device according to Patent Claim 7, characterized in that, of the slider ends (25-1, 26-1) of the slider sections (25, 26) which are located opposite one another, at least the one slider end (25-1 or 26-1) is assigned to a gear speed position (a, d) of the shift shaft (12).

9. Shift device acoording to one of Patent Claims 6 to 8, characterized in that the slider (22) has a central slider section (27) which extends at an incline with respect to the axis of rotation (24-24) of the shift shaft (12), and the central slider section (27) is assigned to the neutral position (N) of the shift shaft (12).

10. Shift device according to one of Patent Claims 7 to 9, characterized in that the triggering of a control signal for adjusting the shift shaft (12) into the axial direction pointing to the other slider section (26, 25) assigned to a gear speed position (a, d) is provided at the junction (25-2, 26-2) between the slider section (27) assigned to the neutral position (N) and a slider section (25, 26) assigned by its slider end (25-1, 26-1) to a gear speed position (a, d).

11. Shift device according to one of Patent Claims 6 to 10, characterized in that the slider (22) is arranged fixedly in terms of movement with respect to the selector sleeve (15).

12. Shift device according to Patent Claim 1, characterized in that the one shaft end (28) of the shift shaft (12) is connected to the latching device (21) and the other shaft end (29) of the shift shaft (12) is connected to a shift actuator element (14), in that the shift element (13) is arranged at a central shaft section (30) of the shift shaft (12) and the selector sleeve (15) is arranged at a shaft section of the shift shaft (12) located between the shift actuator element (14) and the shift element (13), and in that the brake (20) is arranged at the sleeve end of the selector sleeve (15) facing the shift actuator element (14).

13. Shift device according to Patent Claim 1, characterized in that the gear wheel clutches are activated by means of shift rods (31-8, 31-9, 31-10) which are arranged both parallel to the axis and in the same axial region relative to the axis of rotation (24-24) of the shift shaft (12) and axially movably relative to the gearbox casing (11) and each have a clutch slot (32) for the engagement of a shift finger (13) which is used as a shift element.

14. Shift device according to Patent Claim 1, characterized in that the brake (20) is positively engaging and the selector sleeve (15) has a latching segment (33) with latching means, assigned to the significant angle of rotation positions (12-8, 12-9 and 12-10) of the shift shaft (12), for the engagement of a brake engagement element (34) which can move radially with respect to the axis of rotation (24-24) of the shift shaft (12).

## Revendications

1. Dispositif de changement de vitesse pour une boîte de vitesses à engrenage, avec au moins deux accouplement à roues dentées, pour l'accouplement chaque fois d'une roue dentée afférente à son arbre de boîte de vitesses, avec un arbre de manoeuvre (12) monté de façon à pouvoir tourner et déplacable axialement par rapport à un carter de boîte de vitesses, avec au moins un organe de manoeuvre (13) assujetti cinématiquement à l'arbre de manoeuvre (12), pour l'actionnement des accouplements à roues dentées, par des déplacements axiaux de l'arbre de manoeuvre (12), avec une position neutre, correspondant à l'état désaccouplé de tous les accouplements à roues dentées, de l'arbre de manoeuvre (12), par rapport à ses déplacements axiaux, avec des positions d'angle de rotation (12.8, 12.9 et 12.10), significatives de l'arbre de manoeuvre (12), dans chacune desquelles au moins un accouplement à roues dentées afférent est actionnable par l'organe de manoeuvre (13), avec une position de vitesse, correspondant à l'état accouplé d'un accouplement à roues dentées appartenant à la position angulaire en rotation chaque fois significative, de l'arbre de manoeuvre (12), avec un servomoteur (14) pour déplacer l'arbre de manoeuvre (12) dans les directions axiales, avec une douille de sélection (15), utilisée pour actionner l'arbre de manoeuvre (12) dans les positions angulaires de rotation (12.8, 12.9 et 12.10) significatives, la douille de sélection étant disposée concentriquement par rapport à l'arbre de manoeuvre (12) et déplacable axialement, ainsi que mobile en rotation et immobile axialement par rapport au carter de boîte de vitesses (11), et dispostif pour lequel l'arbre de manoeuvre (12) et la douille de sélection (15) sont reliés ensemble au moyen d'une transmission auxiliaire (16) conçue pour effectuer la conversion d'un déplacement dans un sens et dans l'autre en un mouvement rotatif, et la transmission auxiliaire (16) présentant un frein (20) susceptible d'être engagé et dégagé, relié fonctionnellement à l'un des organes de la boîte de vitesses, caractérisé en ce que l'arbre de manoeuvre (12) est disposé de façon assujettie cinématiquement par rapport à l'organe d'asservissement, effectuant des déplacements de réglage axiaux, du servomoteur (14) et la douille de sélection (15) est reliée au frein (20), en ce que la transmission auxiliaire (15) fixe de façon contrainte le déplacement relatif entre l'arbre de manoeuvre (12) et la douille de sélection (15), de la valeur d'un angle de rotation de différence (17), correspondant à l'espacement entre deux positions d'angle de rotation (12.8 et 12.9 ou 18.8 et 12.10) significatives voisines de l'arbre de manoeuvre (12), lorsque l'arbre de manoeuvre (12) parcourt la zone (11) de sa position neutre (N), en ce qu'un dispositif d'encliquetage (21), disposé fonctionnellement entre le carter de boîte de vitesses (11) de la boîte de vitesses à roues dentées et l'arbre de manoeuvre (12), est utilisé pour les positions d'angle de rotation (12.8, 12.9 et 12.10) significatives de l'arbre de manoeuvre (10) et l'agencement étant en outre tel qu'un actionnement de l'arbre de manoeuvre (12) depuis une position de vitesse (a ou d) à la position neutre (N), le frein (20) étant à l'état engagé (20-1), mène obligatoirement à une rotation de l'arbre de manoeuvre (12) dans un premier sens de rotation alors que, par contre, lorsque le frein (20) est à l'état (20.0) dégagé, il mène obligatoirement à une rotation de la douille de sélection (15) dans l'autre sens de rotation, chaque fois de la valeur de l'angle de rotation de différence (17) par rapport au carter de boîte de vitesses (11) de la boîte de vitesses à roues dentées.

2. Procédé de commande d'un dispositif de changement de vitesse selon la revendication 1, pour la manoeuvre de l'arbre de manoeuvre, entre deux positions de vitesse situées dans une position d'angle de rotation significative commune et de part et d'autre de la position neutre, caractérisé en ce que le frein (20) est maintenu à l'état dégagé (20.0 sur la figure 4) lorsque l'arbre de manoeuvre (12) parcourt la position neutre (N).

3. Procédé de commande d'un dispositif de changement de vitesse selon la revendication 1, pour la manoeuvre de l'arbre de manoeuvre entre deux positions de vitesse situées dans des positions d'angle de rotation significatives voisines et de part et d'autre de la position neutre, caractérisé en ce que le frein (20) est maintenu à l'état engagé (20-1 sur la figure 5) lorsque l'arbre de manoeuvre (12) parcourt la position neutre (N).

4. Procédé de commande du dispositif de changement de vitesse selon la revendication 1, pour la manoeuvre de l'arbre de manoeuvre entre deux positions de vitesse situées en des positions d'angle de rotation différentes significatives, non voisines, caractérisé en ce que l'arbre de manoeuvre (12) passe par la position neutre (N) alternativement dans les deux directions axiales et le frein (20) est maintenu à l'état engagé (20-1) lors du passage dans une première direction axiale, et maintenu à l'état dégagé (20-0) lors du passage dans l'autre direction axiale.

5. Procédé selon la revendication 4, pour la manoeuvre de l'arbre de manoeuvre entre une position de vitesse momentanée et une position de vitesse sélectionnée, caractérisé en ce que l'arbre de manoeuvre (12), après atteinte d'une position d'angle de rotation (12-8) significative, ne contenant pas la position de vitesse sélectionnée, et après avoir quitté la position neutre (N) est encore commuté chaque fois dans l'autre direction axiale, avant atteinte d'une position de vitesse (a ou d) dans son déplacement axial (figure 7).

6. Dispositif de changement de vitesse selon la revendication 1, caractérisé en ce qu'une coulisse (22), munie d'un patin de coulisse (23) correspondant, est utilisée pour la transmission auxiliaire.

7. Dispositif de changement de vitesse selon la revendication 6, caractérisé en ce que la coulisse (22) présente deux tronçons de coulisse (25, 26) parallèles à l'angle de rotation (24-24), décalés l'un par rapport à l'autre, tant dans les directions de l'axe de rotation (24-24) de l'arbre de manoeuvre (12) qu'également décalés de la valeur de l'angle de rotation de différence (17).

8. Dispositif de changement de vitesse selon la revendication 7, caractérisé en ce que parmi les extrémités de coulisse (25-1, 26-1), situées à l'opposé l'une de l'autre, des tronçons de coulisse (25, 26) au moins une extrémité de coulisse (25-1 ou 26-1) est associée à une position de vitesse (a, d) de l'arbre de manoeuvre (12).

9. Dispositif de changement de vitesse selon l'une des revendications 6 à 8, caractérisé en ce que la coulisse (22) présente un tronçon de coulisse médian (27) ayant une allure inclinée par rapport à l'axe de rotation 24-24) de l'arbre de manoeuvre (12) et le tronçon de coulisse médian (27) est associé à la position neutre (N) de l'arbre de manoeuvre (12).

10. Dispositif de changement de vitesse selon une des revendications 7 à 9, caractérisé en ce que le déclenchement d'un signal de commande, pour la commutation de l'arbre de manoeuvre (12) dans la direction axiale tournée vers l'autre tronçon de coulisse (26, 25), associé à une position de vitesse (a, d), est prévu à la transition (25-2, 26-2) entre le tronçon de coulisse (27) associé à la position neutre (N) et un tronçon de coulisse (25, 26) associé à une position de vitesse (a, d) par son extrémité de coulisse (25-1, 26-1).

11. Dispositif de changement de vitesse selon l'une des revendications 6 à 10, caractérisé en ce que la coulisse (22) est assujettie cinématiquement à la douille de sélection (15).

12. Dispositif de changement de vitesse selon la revendication 1, caractérisé en ce qu'une première extrémité d'arbre (28) de l'arbre de manoeuvre (12) est relié au dispositif d'encliquetage (21), et l'autre extrémité d'arbre (29) de l'arbre de manoeuvre (12) est reliée à l'organe d'asservissement de manoeuvre (14), en ce que l'organe de manoeuvre (13) est disposé sur un tronçon d'arbre médian (30) de l'arbre de manoeuvre (12) et la douille de sélection (15) est disposée sur un tronçon de l'arbre de manoeuvre (12), situé entre l'organe d'asservissement de manoeuvre (14) et l'organe de manoeuvre (13), et en ce que le frein (20) est disposé sur l'extrémité de douille, tournée vers l'organe d'asservissement de manoeuvre (14), de la douille de sélection (15).

13. Dispositif de changement de vitesse selon la revendication 1, caractérisé en ce que les accouplements à roues dentées sont actionnés par l'intermédiaire de tiges de manoeuvre (31-8, 31-9, 31-10), qui sont disposés tant parallèlement à l'axe, qu'également dans la même zone axiale par rapport à l'axe de rotation (24-24) de l'arbre de manoeuvre (12) et sont déplaçables axialement par rapport au carter de boîte de vitesses (11), et présentent chacune une rainure d'accouplement (32) pour l'engagement d'un doigt de manoeuvre (13) utilisé en tant qu'organe de manoeuvre.

14. Dispositif de changement de vitesse selon la revendication 1, caractérisé en ce que le frein (20) est de type à liaison par ajustement de forme et la douille de sélection (15) présente un segment à cliquets (33), muni des cliquets associés aux positions d'angle de rotation (12-8, 12-9 et 12-10) significatives de l'arbre de manoeuvre (12), pour l'engagement d'un organe d'engagement de frein (34), mobile radialement par rapport à l'axe de rotation (24-24) de l'arbre de manoeuvre (12).
